# EUROPÄISCHE PATENTANMELDUNG

(11) **EP 0 629 547 A1**
(43) Veröffentlichungstag der Anmeldung: **21.12.1994**
(21) Anmeldenummer: 94108583.9
(22) Anmeldetag: 04.06.1994
(51) Int. Cl.: B64C 1/14, E06B 3/66, B64D 11/00

(54) **Vorrichtung zur Unterteilung**

(30) Priorität: 15.06.1993 DE 4319794
(71) Anmelder: Daimler-Benz Aerospace Airbus Gesellschaft mit beschränkter Haftung, D-21129 Hamburg (DE)
(72) Erfinder: Rössner, Bernd, D-21224 Rosengarten (DE); Sprenger, Wilfried, D-21698 Harsefeld-Issendorf (DE)
(74) Vertreter: Hansmann, Dierk, Dipl.-Ing.

(57) **Zusammenfassung**

Die Vorrichtung dient zur Unterteilung einer Kabine eines Verkehrsflugzeuges in einen Arbeitsbereich für Flugbegleiter sowie einen Nutzbereich. Die Vorrichtung ist im wesentlichen aus einem nichttransparenten Wandungsteil sowie mindestens einem Fensterteil ausgebildet. Das Fensterteil ist aus zwei im wesentlichen parallel zueinander angeordneten transparenten Decklagen ausgebildet. Zwischen den Decklagen ist eine Flüssigkristallfolie angeordnet, die mit einer Steuereinrichtung zur Bereitstellung einer Steuerspannung für mindestens einen transparenten und mindestens einen milchig trüben Arbeitszustand verbunden ist.

## Beschreibung

Die Erfindung betrifft eine Vorrichtung zur Unterteilung einer Kabine eines Verkehrsflugzeuges in einen Arbeitsbereich für Begleiter sowie einen Nutzbereich, die im wesentlichen aus einem nichttransparenten Wandungsteil sowie mindestens einem Fensterteil ausgebildet ist.

Derartige Vorrichtungen können als Wandteile ausgebildet sein, die mit einer Fensterscheibe versehen sind. Aufgrund der Fensterscheibe ist es möglich, daß Flugbegleiter während der Dauer von Start- und Landungsphasen ihren jeweiligen Betreuungsbereich möglichst vollständig überblicken können. Während kritischer Flugphasen ist es somit möglich, eine unmittelbare visuelle Überwachung der Passagiere vorzunehmen, um bei einem Auftreten von Notsituationen, beispielsweise bei einem Auftreten von Flugangst, unmittelbar Hilfe leisten zu können. Darüber hinaus ist es auch gewährleistet, daß die Passagiere ihre Flugbegleiter sehen können, und hierdurch ein Eindruck von Sicherheit, Ruhe und Geborgenheit vermittelt werden kann. Außerhalb der kritischen Flugphasen werden die Scheiben mit Vorhängen, Jalousien, Rollos oder Klappen abgedeckt, um die gewünschte optische Separierung vornehmen zu können. Hierdurch können die Passagiere gegebenenfalls von den Flugbegleitern in entsprechenden Arbeitsbereichen durchgeführte Arbeiten nicht verfolgen und eine zwischen bestimmten Sitzbereichen vorgenommene Klassenteilung wird optisch wirksam.

Durch die erforderlichen manuellen Bedienarbeiten bei einem Wechsel vom transparenten Betriebszustand zu einem undurchsichtigen Betriebszustand sowie durch das erforderliche Bauvolumen wird die Benutzung der bekannten Vorrichtungen erschwert.

Aufgabe der vorliegenden Erfindung ist es daher, eine Vorrichtung der einleitend genannten Art derart zu konstruieren, daß ein geringes Bauvolumen realisiert sowie eine einfache Bedienung ermöglicht wird.

Diese Aufgabe wird erfindungsgemäß dadurch gelöst, daß das Fensterteil aus zwei im wesentlichen parallel zueinander angeordneten Decklagen ausgebildet ist, zwischen denen eine Flüssigkristallfolie angeordnet ist, die mit einer Steuereinrichtung zur Bereitstellung einer Steuerspannung für mindestens einen transparenten und für mindestens einen milchig trüben Arbeitszustand verbunden ist.

Durch die Anordnung der Flüssigkristallfolie zwischen den transparenten Decklagen wird sowohl eine erforderliche mechanische Stabilität als auch eine kompakte Anordnung realisiert. Darüber hinaus ist die Vorrichtung durch einfache elektrische Schaltoperationen von einem Betriebszustand in den anderen umschaltbar. Die Bedienung erfolgt durch eine einfache Schaltfunktion, ohne daß mechanische Elemente verschoben oder betätigt werden müßten.

Zur Ermöglichung einer Übersicht über eine unterteilte Kabine wird vorgeschlagen, daß aus dem Wandungsteil und dem Fensterteil eine Klassentrennwand zur Aufteilung der Kabine in unterschiedliche Passagierbereiche ausgebildet ist.

Eine selektive Informationsmöglichkeit über einen Inhalt eines Behältnisses wird dadurch bereitgestellt, daß aus dem Wandungsteil und dem Fensterteil eine Behälterwandung mit steuerbarer Einsichtmöglichkeit ausgebildet ist.

Ein unmittelbarer Zugriff auf ein bestimmtes Fensterteil wird dadurch ermöglicht, daß die Flüssigkristallfolie mit einer im Bereich des zugeordneten Fensterteiles angeordneten lokalen Steuereinrichtung verbunden ist.

Zur Vereinfachung der Betätigung einer Mehrzahl von Fensterteilen wird vorgeschlagen, daß mindestens zwei Flüssigkristallfolien von unterschiedlichen Fensterteilen gemeinsam von einer zentralen Steuereinrichtung beaufschlagt sind.

In der Zeichnung sind Ausführungsbeispiele der Erfindung schematisch dargestellt. Es zeigen:
- Fig. 1: einen Querschnitt durch das Fensterteil,
- Fig. 2: eine Diagrammdarstellung zu Veranschaulichung des Zusammenhanges zwischen Wellenlänge des einfallenden Lichtes und der Durchlässigkeit in zwei unterschiedlichen Betriebszuständen,
- Fig. 3: eine perspektivische Darstellung einer Flugzeugkabine mit seitlich angeordneter Vorrichtung **und**
- Fig. 4: eine perspektivische Darstellung einer Flugzeugkabine mit in einem mittleren Bereich angeordneter Vorrichtung.

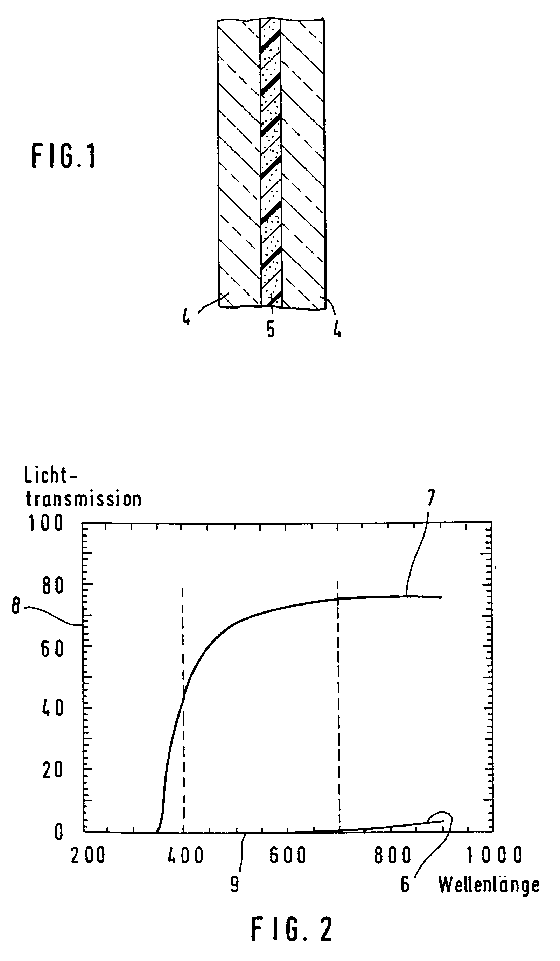

Die Vorrichtung zur Unterteilung einer Kabine (1) eines Verkehrsflugzeuges besteht im wesentlichen aus einem nichttransparenten Wandungsteil (2) sowie einem Fensterteil (3). Das Fensterteil (1) ist gemäß der Ausführungsform in Fig. 1 aus zwei transparenten Decklagen (4) ausgebildet, die mit einem Abstand zueinander und im wesentlichen parallel angeordnet sind. Zwischen den Decklagen (4) ist eine Flüssigkristallfolie (5) angeordnet. Die Flüssigkristallfolie (5) ist an eine Steuereinrichtung angeschlossen, die eine Steuerspannung zur Vorgabe eines jeweiligen Betriebszustandes vorgibt. Gemäß der Darstellung in Fig. 2 kann ein Sperrzustand (6) sowie ein Durchlaßzustand (7) eingenommen werden. Fig. 2 veranschaulicht hierbei für die Zustände (6,7) eine in Prozent aufgetragene Durchlaßfähigkeit (8) in Abhängigkeit von einer jeweiligen Wellenlänge (9).

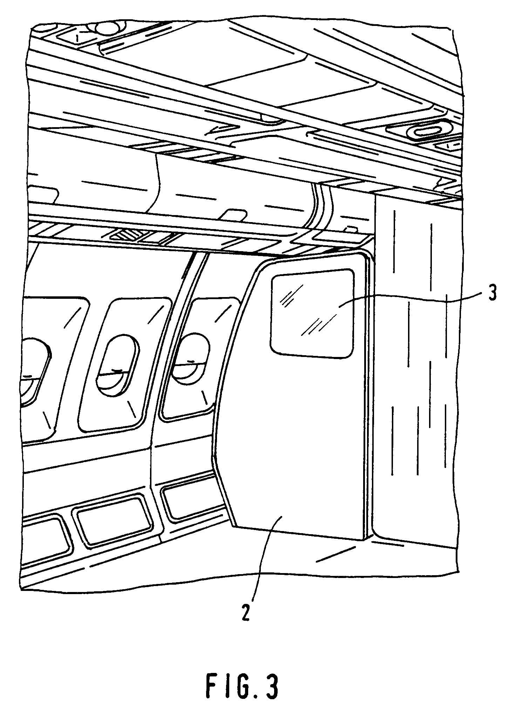

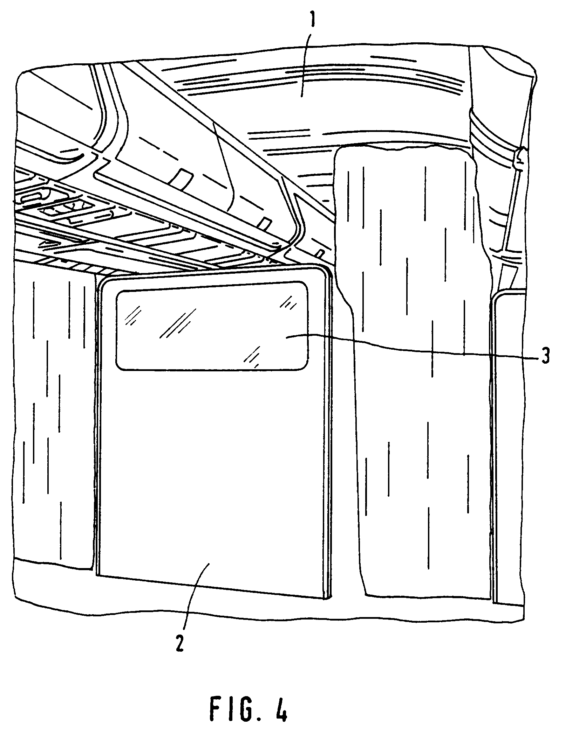

Bei der Ausführungsform gemäß Fig. 3 sind das Wandungsteil (2) und das Fensterteil (3) in einem seitlichen Bereich der Flugzeugkabine (1) angeordnet. Bei der Ausführungsform gemäß Fig. 4 ist eine Anordnung in einem quer zur Flugzeuglängsachse mittleren Bereich vorgesehen.

Alternativ oder ergänzend zu der bereits beschriebenen Verwendung des Wandungsteiles (2) und des Fensterteiles (3) zur Unterteilung der Kabine (1) in unterschiedliche Bereiche für Flugpassagiere oder in einen Arbeitsbereich für Flugbegleiter ist es auch möglich, bestimmte Gegenstände innerhalb eines Gehäuses anzuordnen, das aus dem mit dem Fensterteil (3) versehenen Wandungsteil (2) ausgebildet ist. Für die Bedienung der Flüssigkristallfolie (5) kann beispielsweise ein Schlüsselschalter vorgesehen sein, der es dem Bedienpersonal ermöglicht, sich vom Inhalt des Gehäuses zu überzeugen. Das Gehäuse kann beispielsweise im Bereich von Bordküchen als Fach mit Spirituosen oder Medikamenten ausgebildet sein. Darüber hinaus ist es auch denkbar, im Bereich von Toiletten eine Kontrolle des Füllstandes eines Handtuchfaches oder eines Abfallbehälters vorzusehen. Nichtautorisierte Personen sind hingegen nicht in der Lage, eine Umschaltung der Flüssigkristallfolie (5) von einem milchig trüben in einen transparenten Zustand durchzuführen. Es ist somit sichergestellt, daß die Passagiere keinen ungewollten Zugriff hierauf haben.

Ebenfalls ist es bei allen Anwendungen denkbar, durch geeignete Steuerbereiche im Bereich der Flüssigkristallfolie (5) dem milchig trüben Betriebszustand speziell angesteuerte Bereiche zu überlagern, die Symbole oder Hinweise wiedergeben. In einem milchigen Zustand kann das Fensterteil (3) beispielsweise als Projektionsfläche für Videofilme oder optische Hinweise benutzt werden.

Eine Bedienung der Fensterteile (3) mit Hilfe der Steuereinrichtung kann entweder lokal mit einer dem jeweiligen Fensterteil (3) zugeordneten Steuervorrichtung erfolgen, es ist aber auch möglich, mehrere Fensterteile (3) zentral über eine gemeinsame Steuervorrichtung zu betätigen. Prinzipiell ist auch eine Kombination einer lokalen und einer zentralen Betätigung denkbar.

## Patentansprüche

1. Vorrichtung zur Unterteilung einer eines Verkehrsflugzeuges in einen Arbeitsbereich für Flugbegleiter sowie einen Nutzbereich, die im wesentlichen aus einem nichttransparenten Wandungsteil sowie mindestens einem Fensterteil ausgebildet ist, dadurch gekennzeichnet, daß das Fensterteil (3) aus zwei im wesentlichen parallel zueinander angeordneten transparenten Decklagen (4) ausgebildet ist, zwischen denen eine Flüssigkristallfolie (5) angeordnet ist, die mit einer Steuereinrichtung zur Bereitstellung einer Steuerspannung für mindestens einen transparenten und mindestens einen milchig trüben Arbeitszustand verbunden ist.

2. Vorrichtung nach Anspruch 1, dadurch gekennzeichnet, daß aus dem Wandungsteil (2) und dem Fensterteil (3) eine Klassentrennwand zur Aufteilung der Kabine (1) in unterschiedliche Passagierbereiche ausgebildet ist.

3. Vorrichtung nach Anspruch 1 oder 2, dadurch gekennzeichnet, daß aus dem Wandungsteil (2) und dem Fensterteil (3) eine Behälterwandung mit steuerbarer Einsichtmöglichkeit ausgebildet ist.

4. Vorrichtung nach einem der Ansprüche 1 bis 3, dadurch gekennzeichnet, daß die Flüssigkristallfolie (5) mit einer im Bereich des zugeordneten Fensterteiles (3) angeordneten lokalen Steuereinrichtung verbunden ist.

5. Vorrichtung nach einem der Ansprüche 1 bis 4, dadurch gekennzeichnet, daß mindestens zwei Flüssigkristallfolien (5) von unterschiedlichen Fensterteilen (3) gemeinsam von einer zentralen Steuereinrichtung beaufschlagt sind.
